# EUROPÄISCHE PATENTSCHRIFT

(11) **EP 2 734 757 B1**
(45) Veröffentlichungstag und Bekanntmachung des Hinweises auf die Patenterteilung: **03.12.2014**
(21) Anmeldenummer: 13745053.2
(22) Anmeldetag: 01.08.2013
(51) Int. Cl.: F16K 1/44

(54) **ASEPTISCHES DOPPELSITZVENTIL**
ASEPTIC DOUBLE-SEAT VALVE
SOUPAPE À DOUBLE SIÈGE ASEPTIQUE

(30) Priorität: 29.08.2012 DE 102012107992
(43) Veröffentlichungstag der Anmeldung: 28.05.2014
(73) Patentinhaber: SUEDMO HOLDING GMBH, 73469 Riesbuerg (DE)
(72) Erfinder: FATH, Matthias, 73453 Abtsgmuend-Pommertsweiler (DE); STARK, Heiko, 86757 Wallerstein (DE); NEUHAUSER, Frank, 73450 Neresheim (DE)
(74) Vertreter: Witte, Weller & Partner Patentanwälte mbB
(86) Internationale Anmeldenummer: PCT/EP2013/066147
(87) Internationale Veröffentlichungsnummer: WO 2014/032898

(56) Entgegenhaltungen:
- DE-A1- 4 243 111
- DE-A1-102006 025 653
- DE-U1- 20 317 882

## Beschreibung

Die Erfindung betrifft ein aseptisches Doppelsitzventil, mit einem Gehäuse, das Anschlüsse für zwei Rohrleitungen aufweist, mit einem ersten Ventilsitz und mit einem zweiten Ventilsitz, wobei die Ventilsitze im Gehäuse zwischen den Anschlüssen für die beiden Rohrleitungen in Richtung einer Längsachse voneinander beabstandet angeordnet sind, mit einem ersten Schließkörper, der mit dem ersten Ventilsitz dichtend zusammenwirkt, und mit einem zweiten Schließkörper, der mit dem zweiten Ventilsitz dichtend zusammenwirkt, mit einem ersten langerstreckten Ventilschaft, der hohlförmig ausgebildet und mit dem ersten Schließkörper verbunden ist, und mit einem zweiten langerstreckten Ventilschaft, der sich durch das Innere des ersten Ventilschaftes erstreckt und mit dem zweiten Schließkörper verbunden ist, und mit einer eine radial innere Öffnung aufweisenden Membran zur Abdichtung eines zwischen dem ersten Ventilschaft und dem zweiten Ventilschaft vorhandenen Spaltes, wobei ein äußerer Rand der Membran an einem der beiden Schließkörper und ein innerer Rand der Membran an einem der beiden Ventilschäfte dichtend festgelegt sind.

Ein solches aseptisches Doppelsitzventil ist aus DE 10 2006 025 653 C5 bekannt.

Ein aseptisches Doppelsitzventil der eingangs genannten Art wird insbesondere in einer prozesstechnischen Anlage verwendet, in der aseptische Arbeitsbedingungen gefordert sind. Dies gilt insbesondere für prozesstechnische Anlagen in der Lebensmittelindustrie, in der Getränkeindustrie und in der pharmazeutischen Industrie.

Gegenüber einem Doppelsitzventil, das nicht aseptischen Bedingungen genügen muss, wird bei einem aseptischen Doppelsitzventil gefordert, dass Medium, das durch das Gehäuse des Doppelsitzventils strömt, nicht in den Spalt zwischen dem inneren zweiten Ventilschaft und dem hohlförmigen äußeren ersten Ventilschaft eindringen kann. Zu diesem Zweck weist das bekannte aseptische Doppelsitzventil eine Membran mit einer radial inneren Öffnung zur Abdichtung des zwischen dem ersten Ventilschaft und dem zweiten Ventilschaft vorhandenen Spaltes auf. Bei dem bekannten aseptischen Doppelsitzventil ist der äußere Rand der Dichtung am in Einbaulage des Doppelsitzventils oberen Schließkörper dichtend festgelegt, während der innere Rand der Dichtung an dem als inneren Ventilschaft dichtend festgelegt ist, und zwar in einem Abstand von dem in Einbaulage des Doppelsitzventils unteren Schließkörper, der mit der inneren Ventilstange verbunden ist.

Diese Bauweise des bekannten aseptischen Doppelsitzventils führt zu folgenden Nachteilen. Ein Nachteil besteht darin, dass das bekannte Doppelsitzventil nicht wartungs- bzw. servicefreundlich ist, weil es keine Bauweise ermöglicht, bei der die Membran Bestandteil eines vormontierten Moduls ist. Die Membran kann aus dem Doppelsitzventil nur als einzelnes Teil ausgebaut werden. Muss die Membran ausgewechselt werden, muss dazu das Doppelsitzventil im Bereich der Schließkörper in viele einzelne Teile zerlegt werden, um die Membran ausbauen zu können. Umgekehrt ist es beim Einbau einer neuen Membran bei dem bekannten Doppelsitzventil nicht möglich, die Membran außerhalb des Ventilgehäuses an einem Modul von Elementen vorzumontieren und dann dieses Modul mit der daran bereits festgelegten Membran als Ganzes in das Gehäuse einzusetzen. Damit ist es auch nicht möglich, funktionelle Baugruppen des Doppelsitzventils gegen funktionell gleiche, jedoch strukturell unterschiedliche Baugruppen auszutauschen. Beispielsweise kann es wünschenswert sein, das Doppelsitzventil anstelle mit einer Membran als Dichtung zur Abdichtung des Spaltes zwischen dem ersten und dem zweiten Ventilschaft mit einem anderen Dichtsystem, beispielsweise einem Faltenbalg als Dichtung zu betreiben Für diesen Zweck müsste das bekannte Doppelsitzventil gänzlich neu aufgebaut werden.

Ein weiterer Nachteil des bekannten aseptischen Doppelsitzventils besteht in der Leckageüberwachung. Insbesondere bei aseptischen Doppelsitzventilen ist es erforderlich, im Betrieb des Doppelsitzventils permanent zu überwachen, ob das oder die an dem ersten Schließkörper und das oder die an dem zweiten Schließkörper vorhandenen Dichtelemente mit dem jeweiligen Ventilsitz dichtend zusammenwirken, oder ob es zu einer Leckage und damit zu einem Übertritt von Medium an dem entsprechenden Dichtelement vorbei in den Leckageraum kommt. Hierzu ist das aseptische Doppelsitzventil mit einer Leckageüberwachungsvorrichtung verbunden.

Bei dem bekannten Doppelsitzventil ist an dem in Einbaulage unteren Schließkörper eine Leckageüberwachung für das daran vorhandene Dichtelement nicht vorgesehen. Dies hat zur Folge, dass der Leckageraum zwischen den beiden Schließkörpern nicht chemisch gereinigt werden darf, sondern nur mittels Dampfsterilisation. Bei einer chemischen Reinigung könnte chemisches Reinigungsmittel vom Leckageraum bei einer Undichtigkeit des Dichtelements des unteren Schließkörper in die andere Rohrleitung übertreten, was bei dem bekannten Doppelsitzventil mangels einer Leckageüberwachung für den unteren Schließkörper nicht erkannt werden könnte. Wenn an dem unteren Schließkörper eine Leckageüberwachung vorgesehen werden soll, müsste dazu die innere Ventilstange hohl ausgebildet bzw. hohlgebohrt werden, um eine Leckageüberwachung durch die innere Ventilstange hindurch zu ermöglichen. Dies hätte jedoch eine Schwächung der inneren Ventilstange zur Folge.

DE 42 43 111 A1 offenbart ein aseptisches Doppelsitzventil, bei dem als Dichtelemente Faltenbälge vorhanden sind, die die Ventilschäfte umschließen. Eine damit vergleichbare Bauweise eines Prozessventils für die sterile Verfahrenstechnik ist aus DE 203 17 882 U1 bekannt, d.h. auch bei diesem Prozessventil sind die Dichtelemente als die Ventilschäfte umgebende Faltenbälge ausgebildet.

Aus dem Dokument WO 98/54493 A1 ist ferner ein aseptisches Doppelsitzventil bekannt, das eine Membran aufweist, die an beiden Schließkörpern dichtend festgelegt ist, und die gleichzeitig die Dichtfunktion zur Abdichtung der Schließkörper gegen die Ventilsitze besitzt.

Der Erfindung liegt die Aufgabe zugrunde, ein aseptisches Doppelsitzventil der eingangs genannten Art dahingehend weiterzubilden, dass die Wartungs/Servicefreundlichkeit des Doppelsitzventils verbessert ist.

Erfindungsgemäß wird diese Aufgabe hinsichtlich des eingangs genannten aseptischen Doppelsitzventils dadurch gelöst, dass der äußere Rand der Membran an dem zweiten Schließkörper dichtend festgelegt ist, und dass der innere Rand der Membran vom ersten Schließkörper beabstandet an dem ersten Ventilschaft dichtend festgelegt ist.

Bei dem erfindungsgemäßen aseptischen Doppelsitzventil ist somit der innere Rand der Membran an dem hohlförmig ausgebildeten äußeren Ventilschaft dichtend festgelegt, während bei dem bekannten Doppelsitzventil der innere Rand der Membran an dem inneren Ventilschaft festgelegt ist. Des Weiteren ist bei dem erfindungsgemäßen aseptischen Doppelsitzventil der äußere Rand der Membran an dem zweiten Schließkörper dichtend festgelegt, der mit dem inneren Ventilschaft verbunden ist. Der innere Rand der Membran ist dabei vom ersten Schließkörper axial beabstandet am ersten Ventilschaft festgelegt.

Die erfindungsgemäße Anordnung der Membran zwischen dem in Einbaulage vorzugsweise unteren Schließkörper und dem äußeren hohlförmigen Ventilschaft ermöglicht es nun, im Bereich des zwischen den beiden Schließkörpern vorhandenen Leckageraums funktionelle Teile des Doppelsitzventils zu vormontierten Modulen oder Kassetten zusammenzufassen, die den unteren Schließkörper, die Membran und einen Teil des hohlförmigen äußeren Ventilschafts umfassen. Insbesondere die Membran lässt sich in diese vormontierten Kassetten oder Module eingebaut integrieren, was dem Benutzer des Doppelsitzventils die Wartung des Doppelsitzventils erheblich erleichtert, weil gerade der Austausch und der ordnungsgemäße Einbau der Membran diffizil ist. Demgegenüber benötigt der Benutzer lediglich vom Hersteller eine vormontierte Kassette, die sich auch vom Benutzer leicht ein- und ausbauen lässt, während die Membran in der Kassette bereits ordnungsgemäß montiert ist.

Außerdem kann der Benutzer des Doppelsitzventils auf diese Weise im Bereich des Leckageraums unterschiedliche Systeme für die Abdichtung des Spalts zwischen den Ventilschäften einsetzen, beispielsweise kann eine Kassette, die eine Membran enthält, gegen eine Kassette ausgetauscht werden, die anstelle der Membran beispielsweise einen Faltenbalg zur Abdichtung des Spalts zwischen den Ventilschäften aufweist. Auch andere einfache Abdichtungssysteme können hier in Betracht gezogen werden.

Eine derartige Modulbauweise ist bei dem bekannten Doppelsitzventil hingegen nicht möglich. Dies liegt darin begründet, dass der innere Rand der Membran an dem innen liegenden Ventilschaft festgelegt ist. Diese Anordnung bedingt es nämlich einerseits, dass der innere Rand der Membran mit dem inneren Ventilschaft in Eingriff stehen muss, wozu es erforderlich ist, dass der innere Ventilschaft im Bereich des Eingriffs frei liegen muss, d.h. dort nicht von dem äußeren Ventilschaft eingefasst sein darf. Außerdem ist der innere Ventilschaft typischerweise und bevorzugt einstückig ausgebildet, so dass sich die bekannte Membrananordnung für eine modulare Bauweise in Form von austauschbaren Kassetten im Bereich des Leckageraums von vornherein nicht eignet.

Des Weiteren ermöglicht es die erfindungsgemäße Anordnung der Membran zwischen dem in Einbaulage vorzugsweise unteren Schließkörper und dem hohlförmig ausgebildeten äußeren Ventilschaft, eine Leckageüberwachung am unteren Schließkörper vorzusehen, ohne dass hierfür der innere Ventilschaft hohl sein muss. Dies wird später noch näher beschrieben.

Im Sinne einer axial kurzen Bauweise ist der innere Rand der Membran an dem ersten Ventilschaft vorzugsweise in einem solchen Abstand zu dem ersten Schließkörper festgelegt, dass die Membran nur eine geringe oder im Wesentlichen keine Erstreckung in Richtung der Längsachse aufweist. Der innere Rand der Membran befindet sich dabei axial etwa auf Höhe der Befestigungsstelle des äußeren Randes der Membran am zweiten Schließkörper oder ist allenfalls geringfügig von dieser Befestigungsstelle axial beabstandet.

In einer bevorzugten Ausgestaltung weist der erste Ventilschaft einen sich von dem ersten Schließkörper zu dem zweiten Schließkörper hin erstreckenden hohlförmigen Fortsatz auf, der mit dem ersten Schließkörper lösbar verbunden ist, und durch den sich ein dem zweiten Schließkörper zugewandtes Ende des zweiten Ventilschafts hindurch erstreckt, und wobei der innere Rand der Membran an dem Fortsatz dichtend festgelegt ist.

Diese Maßnahme ermöglicht es einerseits, die Membran axial kurzbauend zu gestalten, weil der innere Rand der Membran in axial unmittelbarer Nähe zu dem zweiten Schließkörper an dem Fortsatz des ersten Ventilschaftes festgelegt werden kann. Die lösbare Verbindung des Fortsatzes mit dem ersten Schließkörper hat zum anderen den Vorteil, dass im Sinne einer modularen Bauweise die Funktionselemente, einschließlich der Membran, vom ersten Schließkörper ausgehend zu einer Kassette zusammengefasst werden können, die als Ganzes vom ersten Schließkörper auf einfache Weise abgenommen werden kann.

Dabei ist es weiterhin bevorzugt, wenn der Fortsatz zwei lösbar miteinander verbundene hülsenförmige Abschnitte aufweist, zwischen denen der innere Rand der Membran eingeklemmt ist.

Diese Maßnahme verbessert weiter die Montage- und damit auch Wartungsfreundlichkeit des Doppelsitzventils, indem der innere Rand der Dichtung zwischen den beiden lösbar miteinander verbundenen hülsenförmigen Abschnitten eingesetzt und durch Verbinden, vorzugsweise Verschrauben, der beiden hülsenförmigen Abschnitte dann eingeklemmt wird. Dieser Vorgang kann im Sinne eines vormontierbaren Aufbaus in Form von Kassetten vollständig außerhalb des Gehäuses erfolgen.

Dabei ist es weiterhin bevorzugt, wenn der Fortsatz auf einer dem zweiten Schließkörper zugewandten Seite des ersten Schließkörpers einen Teller aufweist, dessen äußerer Rand gegen die dem zweiten Schließkörper zugewandte Seite des ersten Schließkörpers im Zusammenwirken mit einem Dichtelement des ersten Schließkörpers dichtend anliegt.

Hierbei ist von Vorteil, dass der Teller des Fortsatzes des ersten Ventilschaftes zusammen mit dem ersten Schließkörper eine Leckageüberwachung im Bereich des ersten Schließkörpers ermöglicht. Wenn das Dichtelement des ersten Schließkörpers seine Dichtwirkung verliert und es somit zu einer Leckage kommt, kann die Leckage zwischen den Teller und den ersten Schließkörper eindringen und durch die Leckageüberwachungsvorrichtung detektiert werden.

In diesem Zusammenhang ist es bevorzugt, wenn zwischen dem Teller und dem ersten Schließkörper ein Spalt für die Leckageüberwachung vorhanden ist, der mit dem Spalt zwischen dem ersten und dem zweiten Ventilschaft kommuniziert.

Vorteilhafterweise kann somit die Dichtigkeit des Dichtelements des ersten Schließkörpers aufgrund der Kommunikation des Spaltes zwischen dem Teller und dem ersten Schließkörper mit dem Spalt zwischen dem ersten und dem zweiten Ventilschaft durch dieselbe Leckageüberwachungsvorrichtung überwacht werden, die auch ein Eindringen von Leckage in den Spalt zwischen dem ersten und dem zweiten Ventilschaft im Bereich der Membran überwacht.

In einer weiteren bevorzugten Ausgestaltung ist der zweite Schließkörper in Form einer Tasse ausgebildet, deren offene Seite vom ersten Schließkörper weg weist und deren Boden dem ersten Schließkörper zugewandt und mit einer radial inneren Öffnung versehen ist, in die der erste Ventilschaft hineinragt, wobei ein äußerer Rand der Tasse mit dem zweiten Ventilsitz dichtend zusammenwirkt, und wobei der äußere Rand der Membran zwischen einem Rand der Öffnung des Bodens der Tasse und einem mit der Tasse lösbar verbundenen Gegenhalter eingeklemmt ist.

Diese Ausgestaltung hat den Vorteil, dass das Festlegen des äußeren Randes der Membran zwischen dem Gegenhalter und dem Rand der Öffnung des Bodens der Tasse auf leicht handzuhabende Weise durchführbar ist, insbesondere wenn der Gegenhalter mit der Tasse verschraubbar ist. Der Gegenhalter ist vorzugsweise im Inneren der Tasse mit dieser verschraubt.

Außerdem ermöglicht die tassenförmige Ausgestaltung des zweiten Schließkörpers im Unterschied zu dem bekannten aseptischen Doppelsitzventil auch eine Leckageüberwachung im Bereich des zweiten Schließkörpers. Eine Leckageüberwachung im Bereich des zweiten Schließkörpers wird durch die tassenförmige Ausgestaltung des zweiten Schließkörpers auf einfache Weise ermöglicht, weil der Innenraum der Tasse als Hohlraum für die Leckageüberwachung genutzt werden kann, ohne dass hierzu der zweite Ventilschaft hohlförmig ausgebildet oder hohlgebohrt sein muss. An dem zweiten Ventilschaft sind allenfalls außenumfängliche Abfräsungen erforderlich, um eine Kommunikation des Innenraums der Tasse mit der Leckageüberwachungsvorrichtung zu ermöglichen, die auch den Spalt zwischen den beiden Ventilschäften überwacht.

Dabei ist es weiterhin bevorzugt, wenn die offene Seite der Tasse durch eine abnehmbare Kappe dicht verschlossen ist, deren äußerer Rand gegen den äußeren Rand der Tasse im Zusammenwirken mit einem Dichtelement des zweiten Schließkörpers dichtend anliegt.

Diese Ausgestaltung, die ähnlich zu der obengenannten Ausgestaltung ist, gemäß der der erste Ventilschaft einen Teller aufweist, der gegen die dem zweiten Schließkörper zugewandte Seite des ersten Schließkörpers dichtend anliegt, ermöglicht vorteilhafterweise eine sichere Leckageüberwachung am zweiten Schließkörper. Kommt es zu einer Fehlfunktion des Dichtelements des zweiten Schließkörpers, dringt Leckage zwischen die Kappe und den zweiten Schließkörper in den tassenförmigen Hohlraum ein und kann dann detektiert werden.

Weiterhin kommuniziert ein Innenraum der Tasse mit dem Spalt zwischen dem ersten Ventilschaft und dem zweiten Ventilschaft.

Hierbei ist wiederum von Vorteil, dass mit der selben Leckageüberwachungsvorrichtung, die das Eindringen von Leckage in den Spalt zwischen dem ersten und dem zweiten Ventilschaft überwacht, auch eine Undichtigkeit des Dichtelements des zweiten Schließkörpers detektiert werden kann.

In einer weiteren bevorzugten Ausgestaltung einer oder mehrerer der obengenannten Ausgestaltungen bildet die Anordnung aus dem Fortsatz, dem zweiten Schließkörper, dem Gegenhalter und der zwischen dem zweiten Schließkörper und dem Fortsatz festgelegten Membran eine vormontierbare und als Ganzes auswechselbare Kassette.

Die vorstehend genannte Kassette liegt mit anderen Worten vorteilhaft als vormontierbare Baugruppe vor, die mit bereits integrierter Membran ohne Aufwand auch kundenseitig ausgewechselt bzw. eingebaut werden kann, ohne dass hierzu ein werksseitiger Kundendienst erforderlich ist.

Außerdem ermöglicht es diese Ausgestaltung, wie in einer weiteren bevorzugten Ausgestaltung vorgesehen ist, eine Austauschkassette anstelle der Kassette mit der Membran in das Doppelsitzventil einzubauen, die zur Abdichtung des Spalts zwischen den beiden Ventilschäften eine als Faltenbalg oder als anderes Dichtsystem ausgebildete Dichtung aufweist.

Somit ermöglicht es das erfindungsgemäße Doppelsitzventil in dieser Ausgestaltung, verschiedene Dichtungssysteme für die Abdichtung des Spalts zwischen den Ventilschäften zu verwenden, ohne dass hierzu das Doppelsitzventil vollständig neu aufgebaut werden muss. Auch das Austauschen der Kassette mit der Membran gegen eine Austauschkassette mit einem anderen Dichtsystem kann kundenseitig vom Benutzer des Doppelsitzventils selbst durchgeführt werden, ohne dass hierzu ein werksseitiger Kundendienst erforderlich ist.

Vorzugsweise ist der Fortsatz des ersten Ventilschafts mit dem ersten Schließkörper verschraubt, und ebenso vorzugsweise ist die Tasse mit dem Gegenhalter verschraubt.

Die Anordnung aus dem Fortsatz, der Tasse und dem Gegenhalter wird durch die Membran zusammengehalten, deren äußerer Rand einerseits zwischen der Tasse und dem Gegenhalter eingeklemmt ist, und deren innerer Rand am Fortsatz festgelegt ist.

Weiter vorzugsweise sind der erste Ventilsitz und/oder der zweite Ventilsitz axial-radiale Ventilsitze.

Axial-radiale Dichtsätze haben den Vorteil einer gegenüber radialen Dichtsätzen höheren Betriebssicherheit, insbesondere beim sogenannten Takten der beiden Schließkörper.

Weitere Vorteile und Merkmale ergeben sich aus der nachfolgenden Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Fig. 1: einen Ausschnitt eines aseptischen Doppelsitzventils im Längsschnitt;
- Fig. 2: eine als Kassette vormontierte Baugruppe von Funktionselementen des Doppelsitzventils in Fig. 1 in Alleinstellung, im Längsschnitt und in gegenüber Fig. 1 vergrößertem Maßstab; und
- Fig. 3: eine Austauschkassette in einer Ansicht wie in Fig. 2, die anstelle der Kassette in Fig. 2 in das Doppelsitzventil in Fig. 1 eingebaut werden kann.

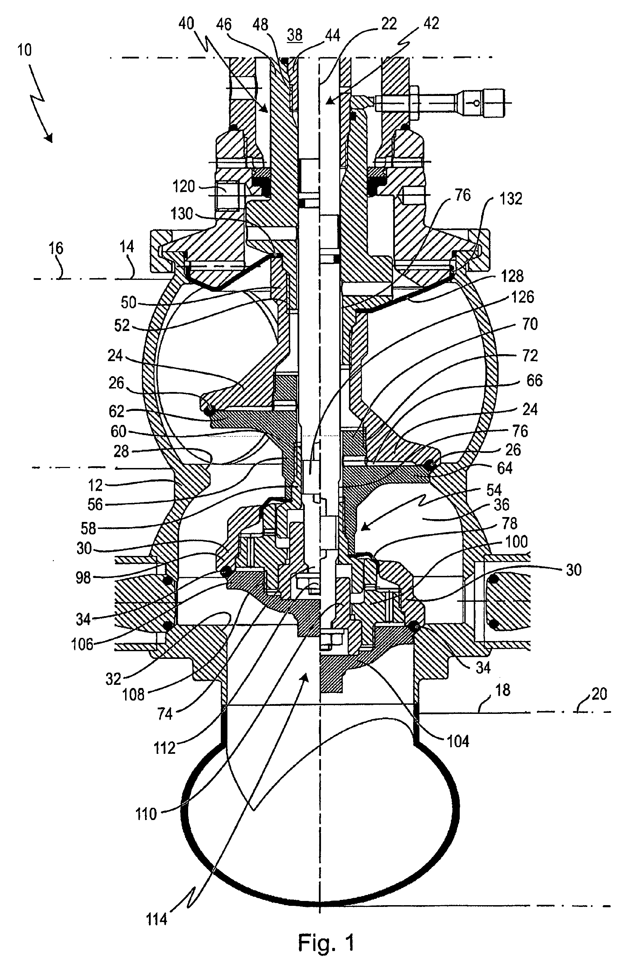

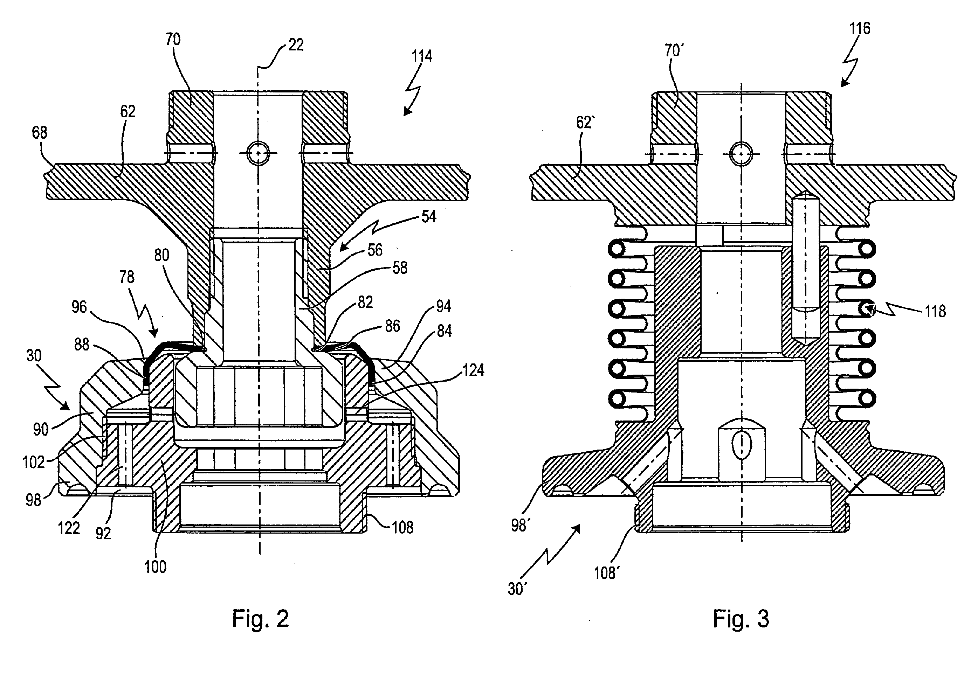

In Fig. 1 ist ein mit dem allgemeinen Bezugszeichen 10 versehenes aseptisches Doppelsitzventil ausschnittsweise dargestellt. Fig. 2 zeigt weitere Einzelheiten des Doppelsitzventils 10.

Gemäß Fig. 1 weist das Doppelsitzventil 10 ein Gehäuse 12 auf, das einen Anschluss 14 für eine mit unterbrochenen Linien angedeutete Rohrleitung 16 und einen Anschluss 18 für eine mit unterbrochenen Linien angedeutete Rohrleitung 20 aufweist. Das Doppelsitzventil 10 dient zum schaltbaren Verbinden bzw. Trennen der Rohrleitungen 16 und 20 miteinander bzw. voneinander.

Eine Längsachse des Doppelsitzventils 10 ist in Fig. 1 mit dem Bezugszeichen 22 versehen.

In dem Gehäuse 12 ist ein erster Schließkörper 24 angeordnet. Der erste Schließkörper 24 weist ein Dichtelement 26 auf. Der erste Schließkörper 24 wirkt mit einem ersten Ventilsitz 28, der zwischen dem ersten Anschluss 14 und dem zweiten Anschluss 18 im Gehäuse 12 angeordnet ist, dichtend zusammen. Die rechte Zeichnungshälfte in Fig. 1 zeigt den ersten Schließkörper 24 in dichtender Anlage gegen den ersten Ventilsitz 28, während die linke Zeichnungshälfte in Fig. 1 den Schließkörper 24 in seiner Offenstellung zeigt, in der der erste Schließkörper 24 von dem ersten Ventilsitz 28 nach oben weg verfahren ist.

In dem Gehäuse 12 ist ein zweiter Schließkörper 30 angeordnet, der von dem ersten Schließkörper 24 in Richtung der Längsachse 22 beabstandet ist.

Der zweite Schließkörper 30 wirkt mit einem zweiten Ventilsitz 32 dichtend zusammen, der in dem Gehäuse 12 zwischen dem ersten Anschluss 14 und dem zweiten Anschluss 18 angeordnet ist. Der zweite Schließkörper 30 weist für die dichtende Anlage an dem zweiten Ventilsitz 32 ein Dichtelement 34 auf.

Die rechte Zeichnungshälfte in Fig. 1 zeigt den zweiten Schließkörper 30 in seiner Schließstellung, in der der zweite Schließkörper 30 gegen den zweiten Ventilsitz 32 dichtend anliegt. Die linke Zeichnungshälfte in Fig. 1 zeigt den zweiten Schließkörper 30 in seiner Offenstellung, in der der zweite Schließkörper 30 von dem zweiten Ventilsitz 32 nach oben weg verfahren ist.

Die Ventilsitze 28 und 32 sind axial-radiale Ventilsitze.

In dem Betriebszustand des Doppelsitzventils 10 gemäß der linken Zeichnungshälfte in Fig. 1 sind die Rohrleitungen 16 und 20 mediumleitend miteinander verbunden, das heißt ein Medium, beispielsweise ein Produkt, kann von der Rohrleitung 16 in die Rohrleitung 20 übertreten, bzw. umgekehrt. In dem in der rechten Zeichnungshälfte in Fig. 1 gezeigten Betriebszustand des Doppelsitzventils 10 sind die Rohrleitungen 16 und 20 voneinander getrennt bzw. gegeneinander abgesperrt. In diesem Betriebszustand kann somit kein Medium von der Rohrleitung 16 in die Rohrleitung 20 übertreten, bzw. umgekehrt.

Die Schließkörper 24 und 30 können noch weitere nicht dargestellte Betriebszustände einnehmen, die als "Takten" bezeichnet werden. Bei einem Takten des ersten Schließkörpers 24 wird dieser geringfügig von dem ersten Ventilsitz 28 weg nach oben angehoben, während der zweite Schließkörper 30 in seiner Schließstellung gemäß der rechten Zeichnungshälfte in Fig. 1 verbleibt. Beim Takten des zweiten Schließkörpers 30 wird dieser von dem zweiten Ventilsitz 32 geringfügig nach oben angehoben, während der erste Schließkörper 24 in seinem Schließzustand gemäß der rechten Zeichnungshälfte in Fig. 1 verbleibt.

Das Takten des ersten Schließkörpers 24 oder des zweiten Schließkörpers 30 dient dazu, einen Leckageraum 36, der sich zwischen den beiden Ventilsitzen 28 und 32 in dem Gehäuse 12 befindet, mit einem Reinigungsmedium zu reinigen. Das Reinigungsmedium kann über die Rohrleitung 16 zugefügt werden, während dann der erste Schließkörper 24 getaktet ist, während der zweite Schließkörper 30 in seiner Schließstellung verbleibt, oder das Reinigungsmedium kann über die Rohrleitung 20 zugeführt werden, wobei dann der zweite Schließkörper 30 getaktet ist, während der erste Schließkörper 24 in seiner Schließstellung verbleibt.

Die vorstehend genannten verschiedenen Bewegungen des ersten Schließkörpers 24 und des zweiten Schließkörpers 30 werden durch einen nicht näher dargestellten Antrieb 38, der, wie bei Doppelsitzventilen üblich, als pneumatischer Antrieb ausgebildet ist, gesteuert.

Der Antrieb 38 wirkt auf den ersten Schließkörper 24 über einen mit dem ersten Schließkörper 24 verbundenen langersteckten ersten Ventilschaft 40, der hohlförmig ausgebildet ist. Der Antrieb 38 wirkt auf den zweiten Schließkörper 30 über einen langerstreckten zweiten Ventilschaft 42, der sich durch den ersten Ventilschaft 40 hindurch erstreckt. Der zweite Ventilschaft 42 ist dabei relativ zu dem ersten Ventilschaft 40 in Richtung der Längsachse 22 verschieblich, und ebenso ist der erste Ventilschaft 40 in Richtung der Längsachse 22 relativ zu dem zweiten Ventilschaft 42 verschieblich, um das voneinander unabhängige Takten der Schließkörper 24 und 30 zu ermöglichen.

Der erste Ventilschaft 40 ist ausgehend von dem Antrieb 38 mehrteilig ausgebildet und weist in dem gezeigten Ausschnitt Schaftteile 44 und 46 auf, die über ein Gewinde 48 miteinander verschraubt sind, während das Schaftteil 46 mit einem Rohrstück 50, das mit dem ersten Schließkörper 24 einstückig verbunden ist, über ein Gewinde 52 verschraubt ist.

Der erste Ventilschaft 40 endet jedoch nicht vom Antrieb 38 aus gesehen an dem ersten Schließkörper 24, sondern setzt sich vom ersten Schließkörper 24 zum zweiten Schließkörper 30 in einem Fortsatz 54 fort. Der Fortsatz 54 des ersten Ventilschaftes 40 weist zwei hülsenförmige Abschnitte 56 und 58 auf, die über ein Gewinde 60 miteinander verschraubt sind. Der hülsenförmige Abschnitt 56 erweitert sich zum ersten Schließkörper 24 hin in Form eines Tellers 62, dessen äußerer Rand 64 gegen die dem zweiten Schließkörper 30 zugewandte Seite des ersten Schließkörpers 24 dichtend anliegt, während zwischen dem Teller 62 und dem ersten Schließkörper 24 ein Spalt 66 verbleibt, der, wie später noch beschrieben, der Leckageüberwachung dient. Die Abdichtung des Tellers 62 gegen den ersten Schließkörper 24 erfolgt über das Dichtelement 26 des ersten Schließkörpers 24.

Wie aus Fig. 2 hervorgeht, weist der Teller 62 an seinem Außenumfang einen an das Dichtelement 26 angepassten Konturverlauf 68 auf.

Der hülsenförmige Abschnitt 56 weist weiterhin einen Abschnitt 70 auf, der in den im radial mittleren Bereich hohlförmig ausgebildeten ersten Schließkörper 24 eingreift und über ein Gewinde 72 mit dem ersten Schließkörper 24 verschraubt ist. Durch Lösen der Schraubverbindung zwischen dem hülsenförmigen Abschnitt 56 und dem ersten Schließkörper 24 kann der Fortsatz 54 somit von dem ersten Schließkörper 24 abgenommen werden.

Der zweite Ventilschaft 42 ist in dem in Fig. 1 gezeigten Ausschnitt, zumindest jedoch in seinem Bereich, der sich durch das Gehäuse 12 erstreckt, einstückig und als Stange aus einem Vollmaterial ausgebildet. Der zweite Ventilschaft 42 weist ein unteres Ende 74 auf, das sich etwa auf Höhe des zweiten Schließkörpers 30 befindet.

Zwischen dem ersten Ventilschaft 40 und dem zweiten Ventilschaft 42 ist ein Spalt 76 vorhanden, da die beiden Ventilschäfte 40 und 42 relativ zueinander längsverschieblich sein müssen. Der Spalt 76 erstreckt sich auch entlang des Fortsatzes 54. Bei einem aseptischen Doppelsitzventil muss jedoch verhindert werden, dass Produkt oder Reinigungsmedium in den Spalt 76 eindringen kann. Der Spalt 76 muss daher gegenüber dem Innenraum des Gehäuses 12 abgedichtet sein. Zu diesem Zweck weist das Doppelsitzventil 10 eine Membran 78 auf, die und deren Einbau zusätzlich mit Bezug auf Fig. 2 nachfolgend näher beschrieben werden.

Die Membran 78 weist eine in Bezug auf die Längsachse 22 radial innere Öffnung 80 auf. Aufgrund der Öffnung 80 weist die Membran 78 einen inneren Rand 82 auf. Die Membran 78 weist weiterhin einen äußeren Rand 84 auf. Insgesamt weist die Membran 78 die Form eines Ringkragens auf, mit einem sich im Wesentlichen senkrecht zur Längsachse 22 erstreckenden Abschnitt 86 und einem sich im Wesentlichen parallel zur Längsachse 22 erstreckenden Abschnitt 88.

Der äußere Rand 84 bzw. der Abschnitt 88 der Membran 78 ist an dem zweiten Schließkörper 30 dichtend festgelegt, während der innere Rand 82 bzw. der Abschnitt 86 an dem ersten Ventilschaft 40 dichtend festgelegt ist.

Der innere Rand 82 der Membran 78 ist dabei zwischen den hülsenförmigen Abschnitten 56 und 58 des ersten Ventilschaftes 40 axial eingeklemmt.

Der Ort der Festlegung des inneren Randes 82 der Membran 78 ist dabei von dem ersten Schließkörper 24, wie aus Fig. 1 hervorgeht, weit beabstandet.

Der zweite Schließkörper 30 ist in Form einer Tasse 90 ausgebildet, deren offene Seite 92 gemäß Fig. 1 von dem ersten Schließkörper 24 weg weist, während ein Boden 94 der Tasse 90 dem ersten Schließkörper 24 zugewandt ist. Der Boden 94 ist mit einer in Bezug auf die Längsachse 22 radial inneren Öffnung 96 versehen, in die gemäß Fig. 1 der erste Ventilschaft 40, hier der hülsenförmige Abschnitt 58 des ersten Ventilschaftes 40, hineinragt.

Ein äußerer Rand 98 der Tasse 90 wirkt mit dem zweiten Ventilsitz 32 mittels des Dichtelements 34 dichtend zusammen.

Im Inneren der Tasse 90 ist ein Gegenhalter 100 angeordnet, der über ein Gewinde 102 innenseitig mit der Tasche 90 verschraubt ist.

Der äußere Rand 84 der Membran 78 ist dabei zwischen dem Rand der Öffnung 96 der Tasse 90 und dem Gegenhalter 100 radial eingeklemmt.

Wie aus Fig. 1 und 2 hervorgeht, ist die Membran 78 axial, das heißt in Richtung der Längsachse 22, kurz bauend ausgebildet.

Die offene Seite 92 der Tasse 90 ist gemäß Fig. 1 durch eine abnehmbare Kappe 104 dicht verschlossen. Dabei liegt ein äußerer Rand 106 der Kappe 104 im Zusammenwirken mit dem Dichtelement 34 gegen den äußeren Rand 98 der Tasse 90 dichtend an. Am äußeren Rand 106 der Kappe 104 ist dazu ein mit dem Konturverlauf 68 an dem Teller 62 vergleichbarer Konturverlauf, der an das Dichtelement 34 angepasst ist, vorhanden.

Die Kappe 104 ist mit dem Gegenhalter 100 über ein Gewinde 108 verschraubt. Der Gegenhalter 100 ist in Richtung der Längsachse 22 relativ zu dem ersten Ventilschaft 40, genauer gesagt dem hülsenförmigen Abschnitt 58 des ersten Ventilschaftes 40, beweglich, um das Takten des zweiten Schließkörpers 30 unabhängig von dem ersten Schließkörper 24 zu ermöglichen.

Der zweite Schließkörper 30 ist nebst dem Gegenhalter 100 mit dem zweiten Ventilschaft 42 fest verbunden, indem eine Steckhülse 110 einerseits mittels einer Mutter 112 gegen den zweiten Ventilschaft 42 und andererseits gegen den Gegenhalter 100 formschlüssig gehalten ist.

Die Anordnung aus dem Fortsatz 54 des ersten Ventilschaftes 40, dem zweiten Schließkörper 30, dem Gegenhalter 100 und der zwischen dem zweiten Schließkörper 30 und dem Fortsatz 54 festgelegten Membran 78 bildet eine vormontierbare und als Ganzes auswechselbare Kassette 114, die in Fig. 2 in Alleinstellung gezeigt ist.

Die Kassette 114 enthält somit bereits die Membran 78 in ihrer Einbaulage, wie sie auch ihrer Einbaulage im Doppelsitzventil 10 gemäß Fig. 1 entspricht. Die Membran 78 hält aufgrund ihrer Einklemmung zwischen den hülsenförmigen Abschnitten 56 und 58 des ersten Ventilschaftes 40 einerseits und ihrer Einklemmung zwischen der Tasse 90 und dem Gegenhalter 100 andererseits die Kassette 114 zusammen.

Zum Ausbauen der Kassette 114 aus dem Doppelsitzventil 10 in Fig. 1 wird die Kappe 104 von dem Gegenhalter 100 abgeschraubt. Die Mutter 112 wird von dem zweiten Ventilschaft 42 abgeschraubt, wonach die Steckhülse 112 herausgezogen werden kann. Anschließend muss nur noch die Verbindung zwischen dem ersten Schließkörper 24 und der Kassette 114 gelöst werden, wozu lediglich der hülsenförmige Fortsatz 56 einschließlich des Tellers 62 von dem ersten Schließkörper 24 abgeschraubt werden muss.

Die Wartung des Doppelsitzventils 10 ist somit wesentlich vereinfacht. Im Falle eines Verschleißes der Membran 78 kann der Benutzer des Doppelsitzventils 10 die Kassette 114, wie oben beschrieben, auf einfache Weise als Ganzes ausbauen und eine neue Kassette dann auf ebenso einfache Weise in das Doppeisitzventil 10 einbauen.

Aufgrund der Zusammenfassung der Funktionselemente des Dichtsystems zum Abdichten des Spaltes 76 zwischen dem ersten Ventilschaft 40 und dem zweiten Ventilschaft 42 in Form der Kassette 114 ist es jedoch ebenso möglich, eine Austauschkassette 116, die in Fig. 3 dargestellt ist, anstelle der Kassette 114 in das Doppeisitzventil 10 in Fig. 1 einzubauen. Die Austauschkassette 116 weist anstelle der Membran 78 beispielsweise einen Faltenbalg 118 auf. Die Austauschkassette 116 ist im Bereich der lösbaren Verbindung mit dem ersten Schließkörper 24 identisch zu der Kassette 114 ausgebildet, das heißt die Austauschkassette 116 weist einen Fortsatz 70' des ersten Ventilschaftes 40 zur Verschraubung mit dem ersten Schließkörper 24 und einen Teller 62' in identischer Bauweise zu dem Fortsatz 70 und dem Teller 62 der Kassette 114 auf. Ein zweiter Schließkörper 30' der Austauschkassette 116 ist in seinem mit dem zweiten Ventilsitz 32 zusammenwirkenden äußeren Randbereich 98' identisch zu dem äußeren Randbereich 98 des ersten Schließkörpers 30 ausgebildet, während der Gegenhalter 100 bei der Austauschkassette 116 entfällt. Um die Kappe 104 anbringen zu können, ist ein Gewinde 108', das dem Gewinde 108 des Gegenhalters 100 der Kassette 114 entspricht, am zweiten Schließkörper 30' ausgebildet, so dass die Kappe 104 unmittelbar mit dem zweiten Schließkörper 30 verschraubt werden kann.

Das Doppelsitzventil 10 ist nicht nur hinsichtlich seiner Wartungs- und Servicefreundlichkeit gegenüber dem bekannten Doppelsitzventil verbessert, sondern auch hinsichtlich der Leckageüberwachung.

Bereits oben wurde beschrieben, dass eine Fehlfunktion des Dichtelements 26 des ersten Schließkörpers 24 durch Eindringen von Leckage in den Spalt 72 zwischen dem ersten Schließkörper 24 und dem Teller 62 detektiert werden kann, indem der Spalt 72 mit dem Spalt 76 zwischen dem ersten Ventilschaft 40 und dem zweiten Ventilschaft 42 kommuniziert, der wiederum mit einem Anschluss 120 kommuniziert, an den eine nicht dargestellte Leckageüberwachungsvorrichtung angeschlossen ist. Aber nicht nur im Bereich des ersten Schließkörpers 24, sondern auch im Bereich des zweiten Schließkörpers 30 ist eine Leckageüberwachung möglich, ohne dass hierzu der zweite Ventilschaft 42 hohlförmig oder hohlgebohrt sein muss.

Eine Fehlfunktion des Dichtelements 34 kann nämlich dadurch detektiert werden, dass in einem solchen Fall Leckage in den Hohlraum bzw. Innenraum der Tasse 90 eindringt, der mit dem Spalt 76 kommuniziert. Leckage kann über Kanäle 122, 124 im Gegenhalter 100 (siehe Fig. 2) bis in den Spalt 76 zwischen dem ersten Ventilschaft 40 und dem zweiten Ventilschaft 42 eindringen, so dass eine solche Leckage ebenfalls über die an den Anschluss 120 angeschlossene Leckageüberwachungsvorrichtung detektiert werden kann. Sämtliche Leckage, die bei dem Doppelsitzventil 10 auftritt, kann somit über den Spalt 76 zwischen dem ersten Ventilschaft 40 und dem zweiten Ventilschaft 42 mit derselben, an den Anschluss 120 angeschlossenen Leckageüberwachungsvorrichtung detektiert werden, ohne dass dazu der zweite Ventilschaft 42 hohlgebohrt oder hohlförmig sein muss. Lediglich Abflachungen 126 können lokal an dem zweiten Ventilschaft 42 vorgesehen sein, um den Durchgang von Leckage durch den Spalt 76 zu gewährleisten. Solche Abflachungen 126 schwächen jedoch nicht den zweiten Ventilschaft 42.

Das Doppelsitzventil 10 weist ferner eine zweite Membran 128 auf, die dazu dient, den Innenraum des Gehäuses 12 zum Antrieb 38 hin abzudichten. Dabei ist ein innerer Rand 130 der Membran 128 am ersten Ventilschaft 40 dichtend festgelegt, und ein äußerer Rand 132 der Membran 128 ist am Gehäuse 12 dichtend festgelegt.

## Patentansprüche

1. Aseptisches Doppelsitzventil, mit einem Gehäuse (12), das Anschlüsse (14, 18) für zwei Rohrleitungen (16, 20) aufweist, mit einem ersten Ventilsitz (28) und mit einem zweiten Ventilsitz (32), wobei die Ventilsitze (28, 32) im Gehäuse (12) zwischen den Anschlüssen (14, 18) für die beiden Rohrleitungen (16, 20) in Richtung einer Längsachse (22) voneinander beabstandet angeordnet sind, mit einem ersten Schließkörper (24), der mit dem ersten Ventilsitz (28) dichtend zusammenwirkt, und mit einem zweiten Schließkörper (30), der mit dem zweiten Ventilsitz (32) dichtend zusammenwirkt, mit einem ersten langerstreckten Ventilschaft (40), der hohlförmig ausgebildet und mit dem ersten Schließkörper (24) verbunden ist, und mit einem zweiten langerstreckten Ventilschaft (42), der sich durch das Innere des ersten Ventilschafts (40) erstreckt und mit dem zweiten Schließkörper (30) verbunden ist, und mit einer eine radial innere Öffnung (80) aufweisenden Membran (78) zur Abdichtung eines zwischen dem ersten Ventilschaft (40) und dem zweiten Ventilschaft (42) vorhandenen Spaltes (76), wobei ein äußerer Rand (84) der Membran (78) an einem der beiden Schließkörper (24, 30) und ein innerer Rand (82) der Membran (78) an einem der beiden Ventilschäfte (40, 42) dichtend festgelegt sind, **dadurch gekennzeichnet, dass** der äußere Rand (84) der Membran (78) an dem zweiten Schließkörper (30) dichtend festgelegt ist, und dass der innere Rand (82) der Membran (78) vom ersten Schließkörper (24) beabstandet an dem ersten Ventilschaft (40) dichtend festgelegt ist.

2. Doppelsitzventil nach Anspruch 1, **dadurch gekennzeichnet, dass** der erste Ventilschaft (40) einen sich von dem ersten Schließkörper (24) zu dem zweiten Schließkörper (30) hin erstreckenden hohlförmigen Fortsatz (54) aufweist, der mit dem ersten Schließkörper (24) lösbar verbunden ist, und durch den sich ein dem zweiten Schließkörper (30) zugewandtes Ende (74) des zweiten Ventilschafts (42) hindurch erstreckt, und dass der innere Rand (82) der Membran (78) an dem Fortsatz (54) dichtend festgelegt ist.

3. Doppelsitzventil nach Anspruch 2, **dadurch gekennzeichnet, dass** der Fortsatz (54) zwei lösbar miteinander verbundene hülsenförmige Abschnitte (56, 58) aufweist, zwischen denen der innere Rand (82) der Membran (78) eingeklemmt ist.

4. Doppelsitzventil nach Anspruch 2 oder 3, **dadurch gekennzeichnet, dass** der Fortsatz (54) auf einer dem zweiten Schließkörper (30) zugewandten Seite des ersten Schließkörpers (24) einen Teller (62) aufweist, dessen äußerer Rand (64) gegen die dem zweiten Schließkörper (30) zugewandte Seite des ersten Schließkörpers (24) im Zusammenwirken mit einem Dichtelement (26) des ersten Schließkörpers (24) dichtend anliegt.

5. Doppelsitzventil nach Anspruch 4, **dadurch gekennzeichnet, dass** zwischen dem Teller (62) und dem ersten Schließkörper (24) ein Spalt (66) für die Leckageüberwachung vorhanden ist, der mit dem Spalt (76) zwischen dem ersten und dem zweiten Ventilschaft (40, 42) kommuniziert.

6. Doppelsitzventil nach einem der Ansprüche 1 bis 5, **dadurch gekennzeichnet, dass** der zweite Schließkörper (30) in Form einer Tasse (90) ausgebildet ist, deren offene Seite (92) vom ersten Schließkörper (24) weg weist und deren Boden (94) dem ersten Schließkörper (24) zugewandt und mit einer radial inneren Öffnung (96) versehen ist, in die der erste Ventilschaft (40) hineinragt, wobei ein äußerer Rand (98) der Tasse (90) mit dem zweiten Ventilsitz (32) dichtend zusammenwirkt, und wobei der äußere Rand (84) der Membran (78) zwischen einem Rand der Öffnung (96) des Bodens (94) der Tasse (90) und einem mit der Tasse (90) lösbar verbundenen Gegenhalter (100) eingeklemmt ist.

7. Doppelsitzventil nach Anspruch 6, **dadurch gekennzeichnet, dass** die offene Seite (92) der Tasse (90) durch eine abnehmbare Kappe (104) dicht verschlossen ist, deren äußerer Rand (106) gegen den äußeren Rand (98) der Tasse (90) im Zusammenwirken mit einem Dichtelement (34) des zweiten Schließkörpers (30) dichtend anliegt.

8. Doppelsitzventil nach Anspruch 6 oder 7, **dadurch gekennzeichnet, dass** ein Innenraum der Tasse (90) mit dem Spalt (76) zwischen dem ersten und dem zweiten Ventilschaft (40, 42) kommuniziert.

9. Doppelsitzventil nach einem der Ansprüche 2 bis 5 und nach einem der Ansprüche 6 bis 8, **dadurch gekennzeichnet, dass** die Anordnung aus dem Fortsatz (54), dem zweiten Schließkörper (30), dem Gegenhalter (100) und der zwischen dem zweiten Schließkörper (30) und dem Fortsatz (54) festgelegten Membran (78) eine vormontierbare und als Ganzes auswechselbare Kassette (114) bilden.

10. Doppelsitzventil nach Anspruch 9, **dadurch gekennzeichnet, dass** der Fortsatz (54) mit dem ersten Schließkörper (24) verschraubt ist.

11. Doppelsitzventil nach Anspruch 9 oder 10, **dadurch gekennzeichnet, dass** die auswechselbare Kassette (144) mit einer Austauschkassette (116) austauschbar ist, wobei die Austauschkassette (116) anstelle der Membran (78) eine als Faltenbalg (118) oder als anderes Dichtsystem ausgebildete Dichtung zur Abdichtung des Spaltes (76) zwischen dem ersten Ventilschaft (40) und dem zweiten Ventilschaft (42) aufweist.

12. Doppelsitzventil nach einem der Ansprüche 1 bis 11, **dadurch gekennzeichnet, dass** der erste Ventilsitz (28) und/oder der zweite Ventilsitz (32) axial-radiale Ventilsitze sind.

## Claims

1. An aseptic double seat valve, comprising a housing (12), which has connections (14, 18) for two pipe conduits (16, 20), a first valve seat (28) and a second valve seat (32), wherein the valve seats (28, 32) are arranged spaced apart from one another in the direction of a longitudinal axis (22) in the housing (12) between the connections (14, 18) for the two pipe conduits (16, 20), a first closing body (24), which interacts in a sealing manner with the first valve seat (28), and a second closing body (30), which interacts in a sealing manner with the second valve seat (32), a first elongate valve stem (40), which is of hollow design and is connected to the first closing body (24), and a second elongate valve stem (42), which extends through the interior of the first valve stem (40) and is connected to the second closing body (30), and a diaphragm (78), which has a radially inner opening (80) and serves to seal off a gap (76) present between the first valve stem (40) and the second valve stem (42), wherein an outer rim (84) of the diaphragm (78) is fixed in a sealing manner on one of the two closing bodies (24, 30), and an inner rim (82) of the diaphragm (78) is fixed in a sealing manner on one of the two valve stems (40, 42), **characterized in that** the outer rim (84) of the diaphragm (78) is fixed in a sealing manner on the second closing body (30), and **in that** the inner rim (82) of the diaphragm (78) is fixed in a sealing manner on the first valve stem (40) at a distance from the first closing body (24).

2. The double seat valve of Claim 1, **characterized in that** the first valve stem (40) has a hollow extension (54) which extends from the first closing body (24) towards the second closing body (30) and is releasably connected to the first closing body (24), and through which an end (74) of the second valve stem (42) which faces the second closing body (30) extends, and **in that** the inner rim (82) of the diaphragm (78) is fixed in a sealing manner on the extension (54).

3. The double seat valve of claim 2, **characterized in that** the extension (54) has two sleeve-shaped sections (56, 58), which are connected releasably to one another and between which the inner rim (82) of the diaphragm (78) is clamped.

4. The double seat valve of claim 2 or 3, **characterized in that**, on a side of the first closing body (24) which faces the second closing body (30), the extension (54) has a disc (62), the outer rim (64) of which rests in a sealing manner against that side of the first closing body (24) which faces the second closing body (30), in interaction with a sealing element (26) of the first closing body (24).

5. The double seat valve of claim 4, **characterized in that** there is a gap (66) for leakage monitoring between the disc (62) and the first closing body (24), which gap communicates with the gap (76) between the first and the second valve stem (40, 42).

6. The double seat valve of any one of claims 1 through 5, **characterized in that** the second closing body (30) is in the form of a cup (90), the open side (92) of which faces away from the first closing body (24) and the base (94) of which faces the first closing body (24) and is provided with a radially inner opening (96), into which the first valve stem (40) projects, wherein an outer rim (98) of the cup (90) interacts in a sealing manner with the second valve seat (32), and wherein the outer rim (84) of the diaphragm (78) is clamped between a rim of the opening (96) of the base (94) of the cup (90) and a counter holder (100) connected releasably to the cup (90).

7. The double seat valve of claim 6, **characterized in that** the open side (92) of the cup (90) is closed in a sealed manner by a removable cap (104), the outer rim (106) of which rests in a sealing manner against the outer rim (98) of the cup (90) in interaction with a sealing element (34) of the second closing body (30).

8. The double seat valve of claim 6 or 7, **characterized in that** an interior of the cup (90) communicates with the gap (76) between the first and the second valve stem (40, 42).

9. The double seat valve of any one of claims 2 through 5 and of any one of claims 6 through 8, **characterized in that** the arrangement comprising the extension (54), the second closing body (30), the counter holder (100) and the diaphragm (78) fixed between the second closing body (30) and the extension (54) forms a cartridge (114) which can be preassembled and can be exchanged as a whole.

10. The double seat valve of claim 9, **characterized in that** the extension (54) is screwed to the first closing body (24).

11. The double seat valve of claim 9 or 10, **characterized in that** the exchangeable cartridge (114) is replaceable with a replacement cartridge (116) which, instead of the diaphragm (78), has a seal designed as a corrugated bellows (118) or as some other sealing system for the purpose of sealing off the gap (76) between the first valve stem (40) and the second valve stem (42).

12. The double seat valve of any one of claims 1 through 11, **characterized in that** the first valve seat (28) and/or the second valve seat (32) are axial-radial valve seats.

## Revendications

1. Soupape à double siège aseptique, comprenant un boîtier (12) qui comprend des raccords (14, 18) pour deux conduites tubulaires (16, 20), comprenant un premier siège de soupape (28) et comprenant un deuxième siège de soupape (32), les sièges de soupape (28, 32) étant disposés dans le boîtier (12) entre les raccords (14, 18) pour les deux conduites tubulaires (16, 20), de manière espacée l'un de l'autre dans la direction d'un axe longitudinal (22), comprenant un premier corps de fermeture (24) qui coopère de manière étanche avec le premier siège de soupape (28), et comprenant un deuxième corps de fermeture (30) qui coopère de manière étanche avec le deuxième siège de soupape (32), comprenant une première tige de soupape allongée (40) qui est de forme creuse et est reliée au premier corps de fermeture (24), et comprenant une deuxième tige de soupape allongée (42) qui s'étend à travers l'intérieur de la première tige de soupape (40) et est reliée au deuxième corps de fermeture (30), et comprenant une membrane (78) présentant une ouverture radialement intérieure (80) pour l'étanchéification d'un interstice (76) présent entre la première tige de soupape (40) et la deuxième tige de soupape (42), un bord extérieur (84) de la membrane (78) étant fixé de manière étanche à l'un des deux corps de fermeture (24, 30) et un bord intérieur (82) de la membrane (78) étant fixé de manière étanche à l'une des deux tiges de soupape (40, 42), **caractérisée en ce que** le bord extérieur (84) de la membrane (78) est fixé de manière étanche au deuxième corps de fermeture (30) et **en ce que** le bord intérieur (82) de la membrane (78) est fixé de manière étanche à la première tige de soupape (40) de manière espacée du premier corps de fermeture (24).

2. Soupape à double siège selon la revendication 1, **caractérisée en ce que** la première tige de soupape (40) comprend un prolongement (54) de forme creuse s'étendant à partir du premier corps de fermeture (24) jusqu'au deuxième corps de fermeture (30), lequel prolongement est relié de manière amovible au premier corps de fermeture (24), et à travers lequel prolongement s'étend une extrémité (74) de la deuxième tige de soupape (42) tournée vers le deuxième corps de fermeture (30), et **en ce que** le bord intérieur (82) de la membrane (78) est fixé de manière étanche au prolongement (54).

3. Soupape à double siège selon la revendication 2, **caractérisée en ce que** le prolongement (54) comprend deux portions (56, 58) en forme de douille reliées de manière amovible l'une à l'autre, entre lesquelles est serré le bord intérieur (82) de la membrane (78).

4. Soupape à double siège selon la revendication 2 ou 3, **caractérisée en ce que** le prolongement (54) comprend, sur un côté du premier corps de fermeture (24) tourné vers le deuxième corps de fermeture (30), un disque (62) dont le bord extérieur (64) s'applique de manière étanche contre le côté du premier corps de fermeture (24) tourné vers le deuxième corps de fermeture (30), en coopération avec un élément d'étanchéité (26) du premier corps de fermeture (24).

5. Soupape à double siège selon la revendication 4, **caractérisée en ce qu'**un interstice (66) de surveillance de fuites est présent entre le disque (62) et le premier corps de fermeture (24), lequel interstice est en communication avec l'interstice (76) entre la première et la deuxième tige de soupape (40, 42).

6. Soupape à double siège selon l'une quelconque des revendications 1 à 5, **caractérisée en ce que** le deuxième corps de fermeture (30) est réalisé sous la forme d'une tasse (90) dont le côté ouvert (92) est orienté à l'écart du premier corps de fermeture (24) et dont le fond (94) est tourné vers le premier corps de fermeture (24) et est pourvu d'une ouverture radialement intérieure (96) dans laquelle pénètre la première tige de soupape (40), un bord extérieur (98) de la tasse (90) coopérant de manière étanche avec le deuxième siège de soupape (32), et le bord extérieur (84) de la membrane (78) étant serré entre un bord de l'ouverture (96) du fond (94) de la tasse (90) et un contre-appui (100) relié de manière amovible à la tasse (90).

7. Soupape à double siège selon la revendication 6, **caractérisée en ce que** le côté ouvert (92) de la tasse (90) est fermé de manière étanche par un couvercle détachable (104) dont le bord extérieur (106) s'applique de manière étanche contre le bord extérieur (98) de la tasse (90), en coopération avec un élément d'étanchéité (34) du deuxième corps de fermeture (30).

8. Soupape à double siège selon la revendication 6 ou 7, **caractérisée en ce qu'**un espace intérieur de la tasse (90) est en communication avec l'interstice (76) entre la première et la deuxième tige de soupape (40, 42).

9. Soupape à double siège selon l'une quelconque des revendications 2 à 5 et selon l'une quelconque des revendications 6 à 8, **caractérisée en ce que** l'ensemble constitué du prolongement (54), du deuxième corps de fermeture (30), du contre-appui (100) et de la membrane (78) fixée entre le deuxième corps de fermeture (30) et le prolongement (54) forme une cassette (114) pouvant être pré-montée et pouvant être remplacée dans son ensemble.

10. Soupape à double siège selon la revendication 9, **caractérisée en ce que** le prolongement (54) est vissé sur le premier corps de fermeture (24).

11. Soupape à double siège selon la revendication 9 ou 10, **caractérisée en ce que** la cassette remplaçable (144) peut être remplacée par une cassette de remplacement (116), la cassette de remplacement (116) comprenant, au lieu de la membrane (78), un joint d'étanchéité réalisé sous la forme d'un soufflet plissé (118) ou d'un autre système d'étanchéité pour l'étanchéification de l'interstice (76) entre la première tige de soupape (40) et la deuxième tige de soupape (42).

12. Soupape à double siège selon l'une quelconque des revendications 1 à 11, **caractérisée en ce que** le premier siège de soupape (28) et/ou le deuxième siège de soupape (32) sont des sièges de soupape axiaux-radiaux.
